# EUROPÄISCHE PATENTSCHRIFT

(11) **EP 2 223 819 B1**
(45) Veröffentlichungstag und Bekanntmachung des Hinweises auf die Patenterteilung: **19.12.2012**
(21) Anmeldenummer: 09015912.0
(22) Anmeldetag: 23.12.2009
(51) Int. Cl.: B60K 15/01, B29C 45/14, F16L 47/28

(54) **Tankstutzen und Verfahren zur Herstellung eines Tankstutzens**
Tank struts and method for manufacturing a fuel nozzle
Manchon de citerne et procédé de fabrication d'un manchon de citerne

(30) Priorität: 31.01.2009 DE 202009001201 U
(43) Veröffentlichungstag der Anmeldung: 01.09.2010
(73) Patentinhaber: NORMA Germany GmbH, 63477 Maintal (DE)
(72) Erfinder: Kertesz, Janos, 65843 Sulzbach (DE)
(74) Vertreter: Knoblauch, Andreas

(56) Entgegenhaltungen:
- EP-A2- 1 674 232
- US-A1- 2004 164 463
- US-A1- 2004 200 846
- US-A1- 2006 088 375

## Beschreibung

Die Erfindung betrifft einen Tankstutzen mit einem Rohr, wobei an mindestens einem Ende des Rohres ein Flansch angeordnet ist, wobei das Rohr glattwandig und von einem glattwandigen, vorgefertigten Rohrstück abgehängt ist und der Flansch an das Rohr angespritzt ist, wobei der Flansch an einer Stirnseite und einer Umfangsfläche des Rohres anliegt, wobei an mindestens einem Ende des Rohres ein Flansch angeordnet ist.

Ferner betrifft die Erfindung ein Verfahren zur Herstellung eines Tankstutzens, wobei das Rohr von einem glattwandigen, vorgefertigten Rohrstück abgelängt wird und der Flansch an einem Ende angespritzt wird, wobei der Flansch an eine Stirnseite am Ende des Rohres und an eine Umfangsfläche des Rohres angespritzt wird.

Tankstutzen dienen z.B. dazu, einen Tank, wie beispielsweise einen Kraftstofftank eines Kraftfahrzeugs, mit einer Kraftstoffleitung zu verbinden. Der Tankstutzen muss dabei eine sichere und dichte Verbindung zwischen dem Kraftstofftank und der Kraftstoffleitung gewährleisten. Herkömmliche Tankstutzen werden daher einstückig an ihren Enden mit Flanschen versehen, die zur Verbindung mit dem Tank bzw. mit der Kraftstoffleitung dienen.

Die einstückige Herstellung des Tankstutzens erfolgt dabei in der Regel im Spritzgussverfahren. Für unterschiedliche Einbaubedingungen, insbesondere wenn unterschiedliche Längen des Tankstutzens gefordert werden, sind angepasste Spritzgussformen erforderlich. Da Spritzgussformen relativ teuer sind, führt dies entweder dazu, dass die Tankstutzen nicht optimal angepasst werden oder dass die Tankstutzen entsprechend viel Geld kosten.

In EP 1 674 232 A2 ist ein Verfahren zur Herstellung eines Stutzens beschrieben, wobei zunächst ein Vorformling mithilfe eines Extrusions- oder Spritzgussverfahrens und anschließendem Tiefziehen oder Blasformen hergestellt wird. Eine zweite Materialanordnung, die einen Flansch aufweist, wird nachfolgend in einem Spritzguss-Koinjektions- oder Monosandwich-Verfahren an den Vorformling angespritzt.

In der gattungsbildenden US 2004/2008846 A1 ist ein Tankstutzen beschrieben, der ein Innenrohr aufweist, an das ein Flansch angespritzt ist. Das Rohr ist aus Aluminium gebildet und an seinen axialen Enden mit jeweils einem radial nach außen gerichteten umlaufenden Kragen versehen.

US 2004/0164463 A1 betrifft eine Schweißverbindung für Kraftstofftanks, die einen Verbindungsabschnitt zum Verschweißen mit dem Kraftstofftank und einen rohrförmigen Abschnitt zum Verbinden mit einer Kraftstoffleitung aufweist. Dabei ist eine Barriereschicht vorgesehen, um das Austreten von Kohlenwasserstoffen zu verhindern.

In US 2006/0088375 ist ein Tankstutzen gezeigt, der an einen Kraftstofftank anschweißbar ist. Dabei ist dieser Tankstutzen integral mit einem rohrförmigen Anschlussbereich zum Anschließen einer Kraftstoffleitung und mit einem Flansch zum Verschweißen mit dem Kraftstofftank ausgebildet. Dafür ist der Tankstutzen beispielsweise im Spritzgussverfahren hergestellt.

Der Erfindung liegt nun die Aufgabe zugrunde, einen Tankstutzen anzugeben, der mit geringem Aufwand in unterschiedlichen Längen herstellbar ist.

Diese Aufgabe wird erfindungsgemäß durch einen Tankstutzen der eingangs genannten Art dadurch gelöst, dass das Rohr eine Barriereschicht aufweist, wobei die Stirnseite mindestens so weit abgedeckt ist, dass die Barriereschicht abgedeckt ist.

Da das Rohr glattwandig ausgebildet ist, ist es möglich, das Rohr von einem vorgefertigten Rohrstück in der gewünschten Länge abzuschneiden. Die Bevorratung wird dadurch stark vereinfacht. Da der Flansch an dieses fertige Rohr angespritzt wird, ist es nicht erforderlich, die Spritzgussform an die Länge des Tankstutzens anzupassen. In der Regel wird dabei das Rohr und der Flansch aus Kunststoff hergestellt. Es ist dabei auch möglich, unterschiedliche Werkstoffe, beispielsweise unterschiedliche Kunststoffe, zu verwenden, um gewünschte Eigenschaften zu erzielen. Durch das Anspritzen des Flansches wird eine zuverlässige und haltbare Verbindung zwischen Flansch und Rohr erzeugt, die eine hohe Dichtigkeit aufweist. Zusätzliche Dichtelemente sind daher nicht weiter erforderlich. Der Herstellungsaufwand und damit die Herstellungskosten des Tankstutzens werden somit gering gehalten. Dabei kann die Spritzgussform für den Flansch für Tankstutzen unterschiedlicher Länge verwendet werden, so dass die Stückkosten gering sind.

Dabei liegt der Flansch an einer Stirnseite und einer Umfangsfläche des Rohres an. Das Ende des Rohres wird also vom Flansch umgeben und so gegen mechanische und andere Umwelteinflüsse geschützt. Gleichzeitig ist die Kontaktfläche zwischen Flansch und Rohr relativ groß, so dass eine haltbare Verbindung zwischen Flansch und Rohr erhalten wird. Diese Verbindungskräfte werden noch dadurch verstärkt, dass die Stirnseite und die Umfangsfläche des Rohres nahezu in einem rechten Winkel zueinander verlaufen.

Das Rohr weist eine Barriereschicht auf. Die Barriereschicht dient dazu, dass der Tankstutzen emissionsarm ist. Insbesondere verhindert sie das Diffundieren von Kohlenwasserstoffen, die in den meisten Kraftstoffen enthalten sind. Die Barriereschicht ist beispielsweise aus Aluminium oder einem Kunststoff gebildet.

Die Stirnseite ist mindestens so weit abgedeckt, dass die Barriereschicht abgedeckt ist. Der Flansch dient also nicht nur zum Verbinden des Tankstutzens mit einem weiteren Bauteil, sondern auch dazu, die Stirnseite zu schützen. So wird verhindert, dass beispielsweise Kraftstoff in die Stirnseite des Rohres eindringt, was im schlimmsten Fall zu einer Zerstörung des Rohres führen kann. Gleichzeitig wird natürlich auch eine hohe Dichtigkeit erhalten.

Bevorzugterweise ist an einem zweiten Ende des Rohres ein zweiter Flansch angespritzt. Dieser Flansch kann ebenso wie der erste Flansch an einer Stirnseite und der Umfangsfläche des Rohres anliegen. Er dient ebenfalls zur Verbindung des Tankstutzens mit einem Bauteil. Der Tankstutzen kann so mit seinen beiden Enden zuverlässig befestigt werden.

Vorteilhafterweise ist eine Außenseite und/oder eine Innenseite des Rohres mit einer Umhüllung bedeckt, die zumindest mit einem der Flansche einstückig ausgebildet ist. Diese Umhüllung dient zum einen dazu, die mechanische Festigkeit des Tankstutzens zu erhöhen. Zum anderen wird die Emissionsdichte des Tankstutzens verbessert. Dabei kann die Umhüllung aus dem gleichen Material wie die Flansche hergestellt werden, beispielsweise aus PE. Bedeckt die Umhüllung Innen- und Außenseite des Rohres, ist das Rohr sozusagen in die Umhüllung und die Flansche eingebettet. Eine derartige Ausbildung lässt sich auch bei unterschiedlichen Rohrlängen mit geringen Veränderungen an den Spritzformen erreichen, da die Form durch das Rohr vorgegeben wird. Es ist also nur erforderlich, zwischen den Flanschen entsprechende Zwischenstücke für die Spritzgussform vorzusehen. Die Umhüllung selbst kann dabei relativ dünn ausgebildet sein, da das Rohr eine ausreichende Stabilität aufweist.

Bevorzugterweise ist einer der Flansche als Einsteckteil ausgebildet. Ein Einsteckteil dient dazu, in einer entsprechend ausgebildeten Hülse aufgenommen zu werden. Dabei sorgt das Einsteckteil für eine relativ schnelle und sichere Verbindung.

Dabei ist besonders bevorzugt, dass das Einsteckteil eine Anlaufschräge und eine Rastkante aufweist. Die Anlaufschräge dient zum leichteren Einrasten eines Rastrings. Dabei wird die Hülse an der Rastkante verrastet, so dass eine sichere Verbindung erhalten wird, die sich nicht von alleine lösen kann.

Vorzugsweise ist einer der Flansche als Schweißflansch ausgebildet. Schweißen, insbesondere Kunststoffschweißen, ist eine häufig verwendete Verbindungsart zwischen einem Tank und einem Tankstutzen. Dadurch wird eine sichere und haltbare Verbindung erzeugt. Durch den Schweißflansch wird die Oberfläche des Tankstutzens vergrößert, so dass auch eine bessere Verbindung zwischen dem Tankstutzen und dem Tank erhalten werden kann.

Dabei ist besonders bevorzugt, dass ein Öffnungsquerschnitt des Flansches an seiner vom Rohr abgewandten Seite größer ist als ein Innendurchmesser des Rohres. Der Flansch kann dann einen entsprechend ausgebildeten Fortsatz des Tanks aufnehmen, ohne dass ein zur Verfügung stehender Durchflussquerschnitt zu weit verengt wird. So kann beispielsweise der Innendurchmesser eines derartigen Fortsatzes dem Innendurchmesser des Rohres entsprechen, wodurch gleichmäßige Strömungsverhältnisse erhalten werden. Gleichzeitig steht für das Verschweißen zwischen Tankstutzen und Tank eine relativ große Oberfläche zur Verfügung, die zu einer sicheren Verbindung führt.

Bevorzugterweise ist ein maximaler Außendurchmesser des Tankstutzens größer als seine axiale Länge. Der Tankstutzen selbst braucht also nur relativ wenig Bauraum. Dies ist insbesondere bei dem knapp bemessenen Platz in einem Kraftfahrzeug von Vorteil. Der Tankstutzen dient dann im Wesentlichen nur dazu, eine sichere Verbindung zwischen einer Kraftstoffleitung und einem Kraftstofftank zu ermöglichen.

Erfindungsgemäß wird die eingangs genannte Aufgabe durch ein Verfahren zur Herstellung eines Tankstutzens dadurch gelöst, dass der Flansch die Stirnseite mindestens so weit abdeckt, dass eine Barriereschicht, die innerhalb des Rohres angeordnet ist, abgedeckt wird.

Der Tankstutzen kann so in nahezu beliebiger Länge hergestellt werden, wobei das Rohr von einem vorgefertigten und gut zu lagernden Rohrstück abgelängt wird. Die Anpassung der Länge des Tankstutzens erfolgt also allein durch die Auswahl eines Rohres mit geeigneter Länge. Eine Anpassung einer Spritzgussform ist nicht erforderlich. Vielmehr können mit einer einzigen Spritzgussform Tankstutzen in nahezu beliebiger Länge gefertigt werden. Dadurch wird das Spritzgießen trotz der relativ teuren Spritzgussform kostengünstig. Gleichzeitig wird durch das Anspritzen des Flansches an das Rohr eine zuverlässig dichte und haltbare Verbindung zwischen Flansch und Rohr erzeugt.

Bevorzugterweise werden dabei beide Enden des Rohres mit je einem Flansch versehen. Die Flansche können dabei gleich oder unterschiedlich ausgebildet sein. Dabei können die Flansche gleichzeitig oder auch nacheinander angespritzt werden. Durch die beiden Flansche erhält man einen vielseitig einsetzbaren Tankstutzen, der gut mit anderen Bauteilen verbindbar ist.

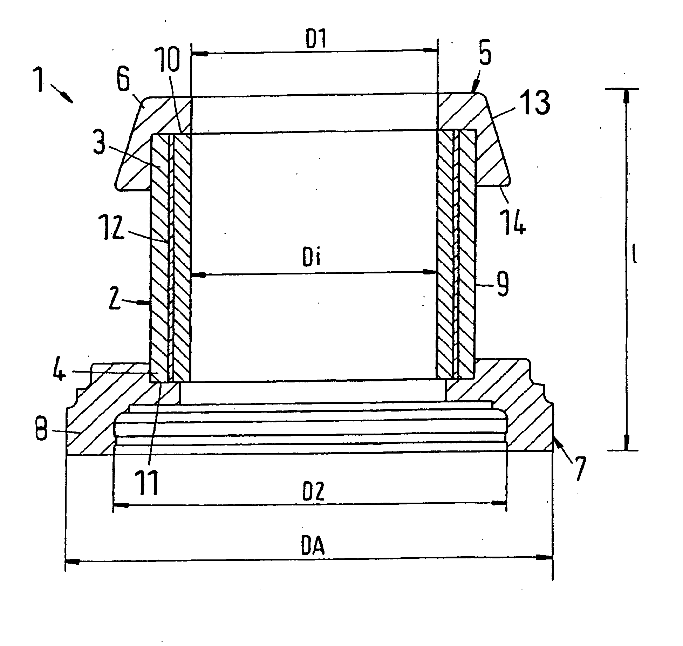

Die Erfindung wird im Folgenden anhand eines bevorzugten Ausführungsbeispiels in Verbindung mit der Figur beschrieben. Darin zeigt in schematischer Ansicht die
- einzige Fig.: einen Tankstutzen in geschnittener Darstellung.

In der einzigen Figur ist ein Tankstutzen 1 dargestellt, der ein Rohr 2 mit einem ersten Ende 3 und einem zweiten Ende 4 aufweist. Am ersten Ende 3 ist ein erster Flansch 5 angeordnet, der als Einsteckteil 6 ausgebildet ist und an das Rohr 2 angespritzt ist.

Am zweiten Ende 4 ist ein zweiter Flansch 7 angespritzt, der als Schweißflansch 8 ausgebildet ist.

Die Flansche 5, 7 sind dabei derartig mit dem Rohr 2 verbunden, dass sie an einer Umfangsfläche 9 des Rohres 2 und jeweils einer Stirnseite 10, 11 des Rohres 2 anliegen. Dabei überdeckt der erste Flansch 5 die Stirnseite 10 des Rohres 2 vollständig, während der zweite Flansch 7 die Stirnseite 11 nur so weit abdeckt, dass eine Barriereschicht 12, die innerhalb des Rohres 2 angeordnet ist, mit abgedeckt ist. Es ist aber auch denkbar, dass der Flansch 7 die Stirnfläche 11 ebenfalls vollständig abdeckt.

Die Barriereschicht 12 verläuft dabei parallel zur Umfangsfläche 9 des Rohres 2, so dass ein Austritt von Kohlenwasserstoffen durch das Rohr verhindert wird.

Der erste Flansch 5 weist einen Öffnungsquerschnitt D1 auf, der dem Innendurchmesser Di des Rohres 2 entspricht. Bei Durchfluss eines Kraftstoffes sind Verwirbelungen daher kaum zu befürchten.

Ein Öffnungsquerschnitt D2 des zweiten Flansches 7 ist dagegen größer als der Innendurchmesser Di des Rohres 2. Dadurch kann ein Fortsatz eines Kraftstofftanks im Flansch 7 aufgenommen werden, ohne dass ein Durchflussquerschnitt unnötig verengt wird. Durch das Aufnehmen eines derartigen Fortsatzes steht dann eine große Fläche zum Verschweißen zwischen dem Tankstutzen 1 und einem Kraftstofftank zur Verfügung, so dass eine zuverlässig dichte und haltbare Verbindung erhalten werden kann.

Der zweite Flansch 7 weist dabei einen Außendurchmesser DA auf, der größer ist als eine axiale Länge L des Tankstutzens 1. Der Tankstutzen 1 ist also relativ kompakt ausgebildet.

Der erste Flansch 5 weist eine Anlaufschräge 13 und eine Rastkante 14 auf. Die Anlaufschräge erleichtert das Einführen des Flansches 5 in eine Aufnahme. Zusätzlich erleichtert sie das Aufbringen eines Rastrings, der hinter die Rastkante 14 eingreifen kann und eine formschlüssige Verbindung zwischen dem Tankstutzen 1 und einer Aufnahme, die z.B. Teil einer Kraftstoffleitung ist, herstellt.

Durch die Herstellung des Tankstutzens 1 durch drei Bauteile, dem Rohr 2, dem ersten Flansch 5 und dem zweiten Flansch 7, ist für eine variable Herstellung des Tankstutzens 1 nur ein geringer Aufwand erforderlich. So kann durch einen einfachen Austausch einzelner Bauteile der Tankstutzen 1 an unterschiedliche Einbaubedingungen angepasst werden. Insbesondere durch die Wahl der Länge des Rohres 2, die keinerlei Änderungen an den weiteren für die Herstellung des Tankstutzens 1 erforderlichen Bauteilen erforderlich macht, kann der Tankstutzen 1 leicht an unterschiedliche Einbaubedingungen angepasst werden. Dabei kann das Rohr 2 als Massenware bezogen werden, so dass es einfach zu bevorraten ist und relativ kostengünstig ist. Durch das Anspritzen der Flansche 5, 7 wird trotzdem ein emissionsarmer Tankstutzen 1 erhalten. In dieser Hinsicht sind keine Nachteile im Vergleich zu den bisher verwendeten, einstückigen Tankstutzen zu erwarten. Hingegen ermöglicht der erfindungsgemäße Tankstutzen eine kostengünstige und einfache Fertigung.

## Patentansprüche

1. Tankstutzen mit einem Rohr, wobei an mindestens einem Ende des Rohres ein Flansch angeordnet ist, wobei das Rohr (2) glattwandig und von einem glattwandigen, vorgefertigten Rohrstück abgelängt ist und der Flansch (5, 7) an das Rohr (2) angespritzt ist, wobei der Flansch (5, 7) an einer Stirnseite (10, 11) und einer Umfangsfläche (9) des Rohres (2) anliegt, **dadurch gekennzeichnet, dass** das Rohr (2) eine Barriereschicht (12) aufweist, wobei die Stirnseite (10, 11) mindestens so weit abgedeckt ist, dass die Barriereschicht (12) abgedeckt ist.

2. Tankstutzen nach Anspruch 1, **dadurch gekennzeichnet, dass** an einem zweiten Ende (4) des Rohres (2) ein zweiter Flansch (5, 7) angespritzt ist.

3. Tankstutzen nach einem der Ansprüche 1 oder 2, **dadurch gekennzeichnet, dass** eine Außenseite und/oder eine Innenseite des Rohres (2) mit einer Umhüllung bedeckt ist, die zumindest mit einem der Flansche (5, 7) einstückig ausgebildet ist.

4. Tankstutzen nach einem der Ansprüche 1 bis 3, **dadurch gekennzeichnet, dass** einer der Flansche (5, 7) als Einsteckteil (6) ausgebildet ist.

5. Tankstutzen nach Anspruch 4, **dadurch gekennzeichnet, dass** das Einsteckteil (6) eine Anlaufschräge (13) und eine Rastkante (14) aufweist.

6. Tankstutzen nach einem der Ansprüche 1 bis 5, **dadurch gekennzeichnet, dass** einer der Flansche (5, 7) als Schweißflansch (8) ausgebildet ist.

7. Tankstutzen nach Anspruch 6, **dadurch gekennzeichnet, dass** ein Öffnungsquerschnitt (D2) des Flansches (5, 7) an seiner vom Rohr (2) abgewandten Seite größer ist als ein Innendurchmesser (Di) des Rohres (2).

8. Tankstutzen nach einem der Ansprüche 1 bis 7, **dadurch gekennzeichnet, dass** ein maximaler Außendurchmesser (DA) des Tankstutzens größer ist als seine axiale Länge (L).

9. Verfahren zur Herstellung eines Tankstutzens nach einem der Ansprüche 1 bis 8, wobei das Rohr von einem glattwandigen, vorgefertigten Rohrstück abgelängt wird und der Flansch an einem Ende angespritzt wird, wobei der Flansch an eine Stirnseite am Ende des Rohres und an eine Umfangsfläche des Rohres angespritzt wird, **dadurch gekennzeichnet, dass** der Flansch die Stirnseite mindestens so weit abdeckt, dass eine Barriereschicht, die innerhalb des Rohres angeordnet ist, abgedeckt wird.

10. Verfahren nach Anspruch 9, **dadurch gekennzeichnet, dass** beide Enden des Rohres jeweils mit einem Flansch versehen werden.

## Claims

1. Tank struts comprising a pipe, wherein a flange is arranged on at least one end of the pipe, the pipe (2) being smooth-walled and cut to length from a prefabricated pipe piece, and the flange (5, 7) is molded onto the pipe (2), wherein the flange (5, 7) bears against the front face (10, 11) and a circumferential surface (9) of the pipe (2), **characterized in that** the pipe (2) comprises a barrier layer (12), wherein the front face (10, 11) is covered at least to an extent that the barrier layer (12) is covered.

2. Tank struts according to claim 1, **characterized in that** a second flange (5, 6) is molded onto a second end (4) of the pipe (2).

3. Tank struts according to any of claims 1 or 2, **characterized in that** an outside and/or an inside of the pipe (2) is covered with a covering which is formed in one piece with at least one of the flanges (5, 7).

4. Tank struts according to any of claims 1 to 3, **characterized in that** one of the flanges (5, 7) is formed as an insert piece.

5. Tank struts according to claim 4, **characterized in that** the insert part (6) comprises a chamfered edge (13) and a locking edge (14).

6. Tank struts according to any of claims 1 to 5, **characterized in that** one of the flanges (5, 7) is formed as a welding flange (8).

7. Tank struts according to claim 6, **characterized in that** an opening cross section (D2) of the flange (5, 7) on a side facing away from the pipe (2) is greater than an inner diameter (Di) of the pipe (2).

8. Tank struts according to any of claims 1 to 7, **characterized in that** a maximum outer diameter (DA) of the tank struts is greater than its axial length (L).

9. Method for producing a tank struts according to any of claims 1 to 8, wherein the pipe is cut to length from a smooth-walled prefabricated pipe piece and the flange is molded onto one end, wherein the flange is molded onto an end face of the end of the pipe and onto an circumferential surface of the pipe, **characterized in that** the flange covers the end face at least to an extent that a barrier layer which is arranged within the pipe is covered.

10. Method according to claim 9, **characterized in that** both ends of the pipe are provided with a flange.

## Revendications

1. Manchon de citerne comprenant un tuyau, dans lequel est agencée, à au moins une extrémité du tuyau, une bride, le tuyau (2) ayant une paroi lisse et étant prolongé par un tronçon de tuyau à paroi lisse préfabriqué, et la bride (5, 7) étant moulée par injection sur le tuyau (2), la bride (5, 7) étant attenante à une face frontale (10, 11) et à une surface périphérique (9) du tuyau (2), **caractérisé en ce que** le tuyau (2) présente une couche barrière (12), la face frontale (10, 11) étant recouverte au moins assez largement pour que la couche barrière (12) soit recouverte.

2. Manchon de citerne selon la revendication 1, **caractérisé en ce qu'**une seconde bride (5, 7) est moulée par injection sur une seconde extrémité (4) du tuyau (2).

3. Manchon de citerne selon l'une quelconque des revendications 1 ou 2, **caractérisé en ce qu'**une face externe et/ou une face interne du tuyau (2) est recouverte d'une enveloppe qui est formée au moins d'une seule pièce avec l'une des brides (5, 7).

4. Manchon de citerne selon l'une quelconque desrevendications 1 à 3, **caractérisé en ce que** l'une des brides (5, 7) est conformée en partie d'enfichage (6) .

5. Manchon de citerne selon la revendication 4, **caractérisé en ce que** la partie d'enfichage (6) présente un biseau d'entrée (13) et une arête d'arrêt (14).

6. Manchon de citerne selon l'une quelconque des revendications 1 à 5, **caractérisé en ce que** l'une des brides (5, 7) se présente sous la forme d'une bride à souder (8).

7. Manchon de citerne selon la revendication 6, **caractérisé en ce qu'**une section transversale d'ouverture (D2) de la bride (5, 7) est plus grande sur sa face opposée au tuyau (2) qu'un diamètre interne (Di) du tuyau (2).

8. Manchon de citerne selon l'une quelconque des revendications 1 à 7, **caractérisé en ce qu'**un diamètre externe (DA) maximal du manchon de citerne est plus grand que sa longueur axiale (L).

9. Procédé de fabrication d'un manchon de citerne selon l'une quelconque des revendications 1 à 8, le tuyau étant prolongé par un tronçon de tuyau préfabriqué à paroi lisse, et la bride étant moulée par injection sur une extrémité, la bride étant moulée par injection sur une face frontale à l'extrémité du tuyau et sur une surface périphérique du tuyau, **caractérisé en ce que** la bride recouvre la face frontale au moins assez largement pour qu'une couche barrière, qui est agencée à l'intérieur du tuyau, soit recouverte.

10. Procédé selon la revendication 9, **caractérisé en ce que** les deux extrémités du tuyau sont respectivement pourvues d'une bride.
